# EUROPEAN PATENT APPLICATION

(11) **EP 4 549 278 A1**
(43) Date of publication of application: **07.05.2025**
(21) Application number: 24202406.5
(22) Date of filing: 25.09.2024
(51) Int. Cl.: B60W 50/14, B60W 60/00, B60W 50/029

(54) **METHOD AND DEVICE OF PERFORMING MININAL RISK MANOEUVRE FOR AUTOMATED DRIVING ROAD SHOULDER STOP BY AUTOMATED DRIVING SYSTEM**

(30) Priority: 31.10.2023 KR 20230147497
(71) Applicant: Hyundai Mobis Co., Ltd., Gangnam-gu Seoul 06141 (KR)
(72) Inventor: LEE, Jae Yong, 16891 Yongin-si (KR)
(74) Representative: Vossius & Partner Patentanwälte Rechtsanwälte mbB

(57) **Abstract**

A method of performing automated driving (MRM)-road shoulder stop (SS) of a vehicle by an automated driving system (ADS) includes generating a first potential stopping location (PSL), determining a target stopping location (TSL) based on the first PSL, and controlling a road shoulder stop of the vehicle based on the TSL. The determining of the TSL includes, based on the determining of the TSL being unsuccessful, performing a first operation for MRM, and the controlling of the road shoulder stop of the vehicle includes, based on determining that it is difficult to reach the TSL, performing a second operation for the MRM.

## Description

### CROSS REFERENCE TO RELATED APPLICATION(S)

This application claims the benefit of earlier filing dates and right of priority to Korean Application No. 10-2023-0147497, filed on October 31, 2023, the contents of which are hereby incorporated by reference herein in their entirety.

### BACKGROUND

### TECHNICAL FIELD

Embodiments relates to a method and device for performing a minimal risk maneuver for automated driving for road shoulder stop by an automated driving system (ADS).

### BACKGROUND

Minimal risk maneuver (MRM) is a fallback function of an automated driving system (ADS) to achieve a minimal risk condition (MRC), which is a stable stopping state. While a dynamic driving task is being performed by the ADS, an event may occur that prevents the ADS from continuing the dynamic driving task. Examples of events may be one or more of the following. i) Errors in the automated driving system, automated driving components, or other vehicle components for ISO/SAE level 3-5 ADS, ii) Risk of ADS shutting down an operational design domain (ODD) for an ISO/SAE Level 3 or 4 ADS [1]. iii) The failure of a fallback ready user (FRU) or passenger to take over a dynamic driving task when the automated driving system issues an intervention request for the ISO/SAE level 3 ADS.

A vehicle may be involved in a collision or faces another challenging situation for the ISO/SAE level 3-5 ADS. In this case, the ADS starts a minimum risk maneuver function to provide enhanced safety for all passengers and other road users. The MRM function is to reduce the risk by selecting the most appropriate MRM type, taking into account the target vehicle condition and traffic situations, and finally bring the vehicle to a stop through vehicle control,

International Standards ISO 23793-1, 2 (Minimal Risk Maneuver-1, 2, MRM-1, 2) disclose the concept of an automated driving vehicle reaching a minimal risk condition (MRC) through a minimal risk maneuver (MRM).

The conventional technology, for example, international standards ISO 23793-1 and 2, disclose the control logic of the MRM road shoulder stop (MRM-SS) function, but some logic needs to be modified/added to improve traffic safety and functional efficiency.

### SUMMARY

Embodiments provide a device and method for performing a minimal risk maneuver for automated driving for an efficient and safe road shoulder stop.

Embodiments provide a device and method for autonomously driving a vehicle to safely and efficiently perform a minimal risk maneuver for automated driving for road shoulder stop.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

In one aspect of the present disclosure, a method of performing automated driving (MRM)-road shoulder stop (SS) of a vehicle by an automated driving system (ADS) includes generating a first potential stopping location (PSL), determining a target stopping location (TSL) based on the first PSL, and controlling a road shoulder stop of the vehicle based on the TSL, wherein the determining of the TSL may include, based on the determining of the TSL being unsuccessful, performing a first operation for MRM, wherein the controlling of the road shoulder stop of the vehicle may include, based on determining that it is difficult to reach the TSL, performing a second operation for the MRM.

The first operation may be generating a second PSL different from the first PSL or changing an MRM type, the MRM type may be one of MRM type 1 for a straight stop, MRM type 2 for an in-lane stop, or MRM type 3 for a road shoulder stop, and the changing of the MRM type may include changing the MRM type from the MRM type 3 to one of the MRM type 1 and the MRM type 2.

The changing of the MRM type may include: changing the MRM type from the MRM type 3 to the MRM type 2 based on at least one of a communication module, a sensing module, and database of the ADS being in a normal state; and changing the MRM type from the MRM type 3 to the MRM type 1 based on the communication module, the sensing module and the database of the ADS being in an abnormal state.

The first operation may include: generating the second PSL based on a preset condition not being satisfied; and changing the MRM type based on the preset condition being satisfied.

The preset condition may include: a condition that a number of times the determining of the TSL is unsuccessful is greater than or equal to a threshold number of times; or a condition that data received from a vehicle ahead or infrastructure through vehicle-to-everything (V2X) communication indicates that it is difficult to determine the TSL.

The second operation may be changing an MRM type, the MRM type may be one of MRM type 1 for a straight stop, MRM type 2 for an in-lane stop, or MRM type 3 for a road shoulder stop, and the changing of the MRM type may include changing the MRM type from the MRM type 3 to one of the MRM type 1 and the MRM type 2.

The changing of the MRM type may include: changing the MRM type from the MRM type 3 to the MRM type 2 based on at least one of a communication module, a sensing module, and database of the ADS being in a normal state; and changing the MRM type from the MRM type 3 to the MRM type 1 based on the communication module, the sensing module and the database of the ADS being in an abnormal state.

The controlling of the road shoulder stop of the vehicle may include, based on determining that it is difficult to reach the TSL, performing the second operation and a fallback alarm, and the fallback alarm may be at least one of a message alarm or a sound alarm to guide a fallback of a driver of the vehicle.

In another general aspect, an automated driving system (ADS) for performing a minimal risk maneuver for automated driving (MRM)-road shoulder stop (SS) of a vehicle includes: a transceiver; a memory; and one or more processors. The one or more processors are configured to performs operations, the operations including: generating a potential stopping location (PSL); determining a target stopping location (TSL) based on the PSL; and controlling a road shoulder stop of the vehicle based on the TSL. The determining of the TSL includes, based on the determining of the TSL being unsuccessful, performing a first operation for MRM. The controlling of the road shoulder stop of the vehicle includes, based on determining that it is difficult to reach the TSL, performing a second operation for the MRM.

With a method/device according to embodiments, a minimal risk maneuver for automated driving for road shoulder stop may be efficiently performed.

With a method/device according to embodiments, a minimal risk maneuver for automated driving for road shoulder stop may be safely performed.

With a method/device according to embodiments, a minimal risk maneuver for automated driving for road shoulder stop may be accurately performed.

Further scope of applicability of the present disclosure will become apparent from the following detailed description. Various changes and modifications within the spirit and scope of the present disclosure can be clearly understood by those skilled in the art, and therefore it is to be understood that the detailed description and specific embodiments such as preferred embodiments of the present disclosure are given by way of example only.

### BRIEF DESCRIPTION OF THE DRAWINGS

The accompanying drawings, which are included to provide a further understanding of the disclosure and are incorporated in and constitute a part of this application, illustrate embodiment(s) of the present disclosure and together with the description serve to explain the principle of the present disclosure. For a better understanding of the various embodiments described below, the following description of the embodiments should be read in conjunction with the accompanying drawings, which include corresponding parts with like reference numbers throughout the drawings. In the drawings:
FIG. 1 shows a state diagram according to embodiments;
FIG. 2 illustrates a minimal risk maneuver (MRM) according to embodiments;
FIG. 3 shows an MRM classification;
FIG. 4 illustrates a vehicle control device according to embodiments;
FIG. 5 illustrates a vehicle structure according to embodiments;
FIG. 6 illustrates a minimal risk maneuver for road shoulder stop, according to embodiments;
FIG. 7 illustrates the operation of a minimal risk maneuver for road shoulder stop according to embodiments;
FIG. 8 illustrates the operation of a minimal-risk maneuver for road shoulder stop according to embodiments; and
FIG. 9 illustrates a method of a minimal risk maneuver for road shoulder stop according to embodiments.

### DETAILED DESCRIPTION

Preferred embodiments of the embodiments will be described in detail, examples of which are shown in the accompanying drawings. The following detailed description with reference to the accompanying drawings is intended to illustrate preferred embodiments of the embodiments rather than to present only embodiments that can be implemented in accordance with the embodiments. The following detailed description includes details to provide a thorough understanding of the embodiments. However, it will be apparent to those skilled in the art that embodiments can be practiced without these details.

Although most terms used in the embodiments have been selected from general ones widely used in the art, some terms have been arbitrarily selected by the applicant and their meanings are explained in detail in the following description as needed. Thus, the embodiments should be understood based upon the intended meanings of the terms rather than their simple names or meanings.

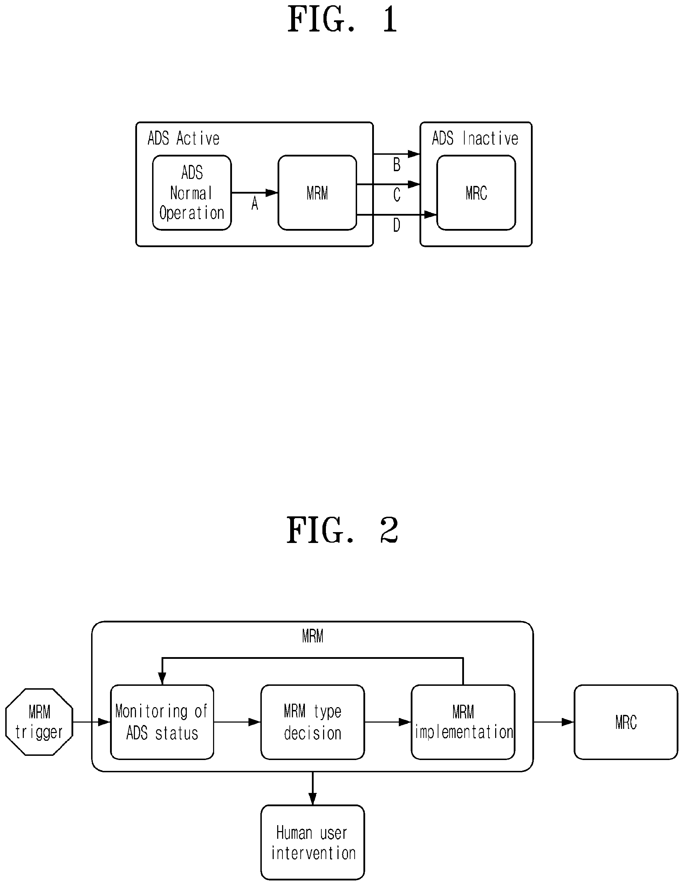

FIG. 1 shows a state diagram according to embodiments.

FIG. 1 shows an example MRM state diagram for MRM (3.1 Minimal Risk Maneuver). The specific states and switching conditions of MRM may vary from one automated driving system (ADS) to another.

The definitions of terms according to embodiments are as follows.

Minimal risk maneuver (MRM) refers to an operation performed by an ADS to reach a minimal risk condition. Minimal risk condition (MRC) is a stable, stationary state to which the user or ADS may bring the vehicle after performing a dynamic driving task (DDT) fallback to reduce the risk of a collision when a given movement cannot or should not be continued. Subject vehicle refers to a vehicle equipped with an ADS capable of performing MRM. Standstill management is an action taken by the ADS to maintain the vehicle in the MRC. Lane boundary refers to the boundary of a lane as determined by visible lane markings or, in the absence of visible lane markings, the boundary of a lane as determined by incidental visible road features or other means such as positioning related to digital maps, magnetic markers, etc. Road shoulder is a portion of a road that is placed at the edge of the road, outside the lane boundaries, to allow emergency vehicles to bypass traffic congestion or to provide a place for troubled vehicles to exit from moving traffic. Acceleration control refers to controls that use vehicle functions, such as powertrain control, to produce positive acceleration. Deceleration control refers to controls that use vehicle functions, such as brakes, to generate negative acceleration. ADS Active indicates that the ADS performs the entire DOT in the ADS active state, which is the ADS normal operation state or MRM state. In the case where the state is switched from the ADS Active to ADS Inactive (B), the ADS deactivation procedure defined for each ADS for the active ADS continues to apply. ADS Normal Operation means that in the ADS normal operation state, the ADS performs the DDT as the system is intended to operate. In the ADS Normal Operation state, the ADS determines whether the MRM is needed. When it is determined that the MRM is needed, the ADS switches to MRM (A). In the minimal risk maneuver state, the ADS controls its vehicle to reach the MRC state.

Abbreviations used in this document are defined as follows. ADS (Automated Driving System), DDT (Dynamic Driving Task), FRU (Fallback-Ready User), HMI (Human Machine Interface), MRM (Minimal Risk Maneuver), MRC (Minimal Risk Condition), OEDR (Object and Event Detection Response), ODD (Operational Design Domain), ROI (Region of Interest), RTI (Request to Intervene), SV (Subject Vehicle).

The MRM state is operated as follows. The ADS monitors the ADS status. The ADS determines the type of MRM. The ADS controls the subject vehicle (SV) to execute the MRM. The ADS notifies other traffic participants about the MRM execution. In the case where the SV has passengers, ADS notifies all passengers inside the SV about the MRM execution.

When the state is switched from MRM to ADS Inactive (C), the conditions for default ADS implementation in the inactive state may be applied, but additional conditions may be applied during an ongoing MRM.

In the case where the state is switched from MRM to MRC (D), the vehicle speed is set to 0 (V_sv=0 [kph]), standstill management is enabled, and a risk warning light is applied.

In the case of ADS Inactive, the ADS is released from the state and does not perform the DDT function.

The MRC is a state where the risk is minimal, for example, the subject vehicle is stable and stationary.

In the MRC state, the ADS performs standstill management. The ADS turns on risk warning lights. The ADS communicates with the activated human user.

As used herein, a vehicle may be referred to as a means of transportation, including robots, urban air mobility (UAM), and automated driving devices.

FIG. 2 illustrates a minimal risk maneuver (MRM) according to embodiments.

FIG. 2 illustrates an example MRM process for MRM. The detailed process of the MRM may vary from ADS to ADS.

When an ADS requests an MRM, the MRM is performed through the following steps

Monitoring of ADS status: First, the ADS checks the status of the system. It determines the current DDT performance capabilities of the ADS by analyzing the severity of the malfunction, identifying its impact on the system, and checking the conditions of related system components.

Determining MRM type: The most appropriate MRM type is selected. The determination includes internal (system status) and external (e.g., traffic density, ODD) information. By default, it is recommended to maintain the MRM type selection. However, the type may change if significant internal or external factors change or if changes in traffic conditions make the selected MRM infeasible. In the case where the MRM type changes while the ADS is performing the MRM, the ADS ensures that multiple MRM type changes do not delay the system from reaching the MRC in a reasonable and safe manner. MRM implementation: Includes longitudinal and lateral control to perform the selected MRM. The above steps iterate until the vehicle reaches the MRC state. During the MRM process, a human user may intervene and take over the DDT.

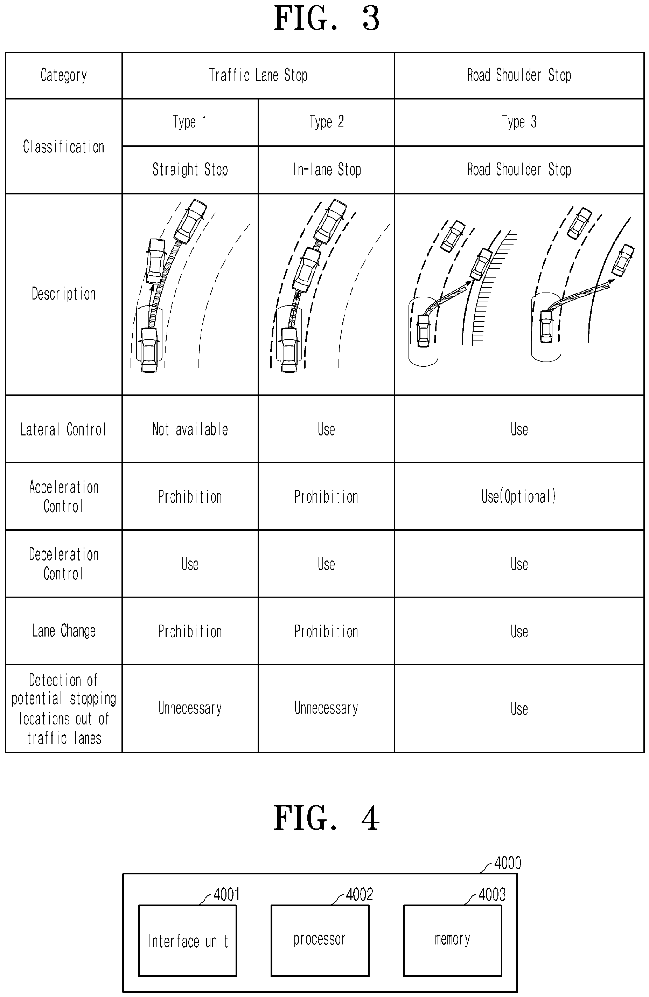

FIG. 3 shows an MRM classification.

Depending on the internal and external conditions of the ADS-equipped vehicle, the available MRMs may vary. MRMs are categorized into three types as shown in FIG. 3. The MRM types may be referred to as MRM Type 1, MRM Type 2, and MRM Type 3. MRMs may be categorized into Traffic Lane Stop and Road Shoulder Stop based on the location of the stop. Additional classes may be added according to embodiments.

MRM Type 1 represents the straight stop, where lateral control may not be available, acceleration control may be prohibited, deceleration control may be used, lane change may be prohibited, and detection of potential stopping locations out of traffic lanes may not be necessary.

MRM Type 2 represents the traffic lane stop, where lateral control may be available, acceleration control may be prohibited, deceleration control may be used, lane change may be prohibited, and detection of potential stopping locations out of lanes may be unnecessary.

MRM Type 3 represents the shoulder stop, where lateral control may be available, acceleration control may be optionally used, deceleration control may be used, lane change may be used, and detection of potential stopping locations out of lanes may be used.

The traffic lane stop is a method of emergency stopping among other road users when a critical malfunction occurs in the subject vehicle or its ADS. There are two types of traffic lane stops: straight stop and in-lane stop. The traffic lane stop may affect traffic flow and may potentially contribute to secondary collisions depending on the work area.

The straight stop is a method of stopping a vehicle using only longitudinal control without active lateral control. The straight stop uses longitudinal deceleration control to stop the vehicle when lateral control is not available. The straight stop is applied only when lateral control is not possible available (e.g., lane detection failure, malfunction of the steering actuator) or there is no lane to follow in the ODD (e.g., a valet parking system).

Because lateral control is not available during the straight stop MRM, the vehicle may cross the lane boundary or stop outside the lanes. The straight stop includes deceleration control only.

The in-lane stop is a method of stopping the vehicle within the boundaries of the lane in which the vehicle is traveling when the MRM is initiated. Longitudinal deceleration and lateral control are used, as well as environmental (sensor, map data, etc.) information about the path (and optionally a target ahead). The in-lane stop may be applied in situations where lane change is not possible or it is not possible to drive to reach a shoulder stop location. The MRC is achieved within the boundaries of the current lane.

Road shoulder stop: For road shoulder stops, both lateral and longitudinal controls are used to ensure that the subject vehicle stops as far away from the traffic flow as possible. As a result of the shoulder stop maneuver, at least a portion of the vehicle remains stationary outside the lane. The road shoulder stop maneuver is intended to minimize the impact of the MRM on nearby road users and to help passengers exit the vehicle in a safe manner.

The road shoulder stop uses both longitudinal and lateral controls as well as information about the driving environment (sensor, map data, or other means for driving environment awareness) related to the road ahead and the related lane. For road shoulder stops, the ADS may determine the location to stop the vehicle and determine whether the vehicle can reach the location to stop.

Lane boundary crossing may be determined by the ADS performing MRM, and the number of lane boundary crossings is not limited. Lane change is made only toward the target shoulder intended by the MRC. If safe interaction with other vehicles is necessary, acceleration control may be performed while driving to a potential stopping location. The MRC may be achieved on a hard road shoulder by partially or completely removing the SV from the active lane.

Changing the MRM type: During MRM execution, an additional relevant event may occur inside or outside the vehicle, or the ADS may recognize additional information. When the ADS determines that it is not appropriate to reach the initially intended MRC, the ADS may change the intended MRC to a lower MRM type. The MRM type may only be changed in one direction: from a higher type to a lower type. If the MRM type is changed while the ADS is performing the MRM, the ADS ensures that multiple MRM type changes do not delay the system from reaching the MRC in a reasonable and safe manner.

FIG. 4 illustrates a vehicle control device according to embodiments.

A vehicle control device 4000 according to the embodiments is a device that controls the operation of a vehicle according to embodiments. The vehicle control device may be referred to as an integrated autonomous vehicle controller 600. The vehicle control device may include an interface unit 4001, a processor 4002, and a memory 4003.

The memory may store instructions, signaling information, data, and the like for performing operations according to embodiments. The memory may be connected to the interface unit and the processor to transmit and receive necessary signals.

The interface unit may receive signals, information, data, and the like delivered to the vehicle control device and pass the same to the memory and/or the processor. It may also deliver signals, information, data, and the like generated by the memory and/or processor to the vehicle and/or the driver and/or passengers.

The processor may perform control operations of the vehicle according to embodiments based on the data and/or instructions stored in the memory.

The vehicle control device of FIG. 4 may correspond to a device mounted on the vehicle, or may correspond to a terminal device that controls the vehicle.

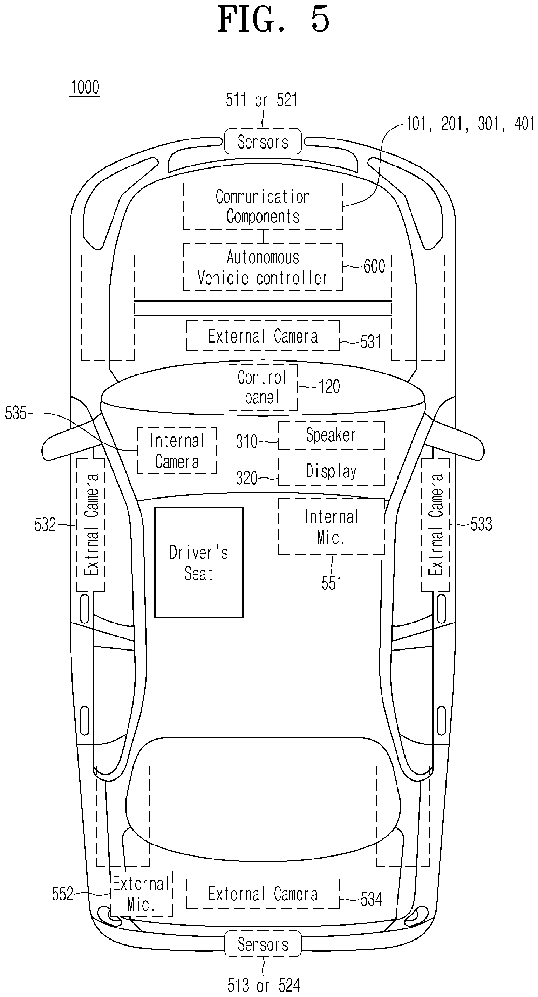

FIG. 5 illustrates a vehicle structure according to embodiments.

A vehicle according to embodiments may be configured as shown in FIG. 5 and may perform autonomous driving by an autonomous driving control system. The vehicle according to the embodiments may be referred to as an autonomous vehicle, a robot, urban air mobility (UAM), an autonomous driving device, and the like.

The autonomous vehicle 1000 may be implemented mainly based on an integrated autonomous vehicle controller 600 that transmits and receives data necessary for autonomous driving control of the vehicle through a driving information input interface 101, a travel information input interface 201, an occupant output interface 301, and a vehicle control output interface 401. The integrated autonomous vehicle controller may be referred to herein as a controller, processor, or simply a control unit.

The integrated autonomous vehicle controller may acquire driving information according to an occupant's operation of a user input unit in either an autonomous driving mode or a manual driving mode of the vehicle through the driving information input interface. The user input unit may include a driving mode switch and control panel 120 (e.g., a navigation terminal mounted on the vehicle, a smartphone or tablet carried by the occupant, etc.). Thus, the driving information may include travel mode information and navigation information about the vehicle.

In addition, the integrated autonomous vehicle controller may provide warning information along with the driving state information described above to the driver through the occupant output interface when it is determined that the driver needs to be warned in the autonomous driving mode or manual driving mode of the vehicle. A speaker 310 and a display 320 may be included to audibly and visually output such travel state information and warning information.. The display may be implemented as the same device as the control panel described above, or may be implemented as a separate, independent device.

Further, the integrated autonomous driving controller may communicate control information for controlling the driving of the vehicle in the autonomous driving mode or manual driving mode of the vehicle to sub-control systems applied to the vehicle via the vehicle control output interface. The sub-control systems for controlling the driving of the vehicle may include at least one of a motor control system, an engine control system, a brake control system, and a steering control system. The integrated autonomous vehicle controller may communicate at least one of the motor control information, the engine control information, the brake control information, and the steering control information as control information to each of the sub-control systems via the vehicle control output interface.

The integrated autonomous driving controller may acquire driving information according to the driver's operation and travel information indicative of the travel state of the vehicle via the driving information input interface and the travel information input interface, respectively, and may provide travel state information and warning information generated based on the autonomous driving algorithm via the occupant output interface.

To ensure reliable autonomous driving of the vehicle, the autonomous driving device according to embodiments may include sensors configured to detect objects around the vehicle, such as neighboring vehicles, pedestrians, roads, or fixed facilities (e.g., traffic lights, milestones, traffic signs, construction fences, etc.).

The sensors may include one or more of a LiDAR sensor, a radar sensor, and a camera sensor to detect nearby objects outside of the vehicle. The sensors may include a front LiDAR sensor 511, a front radar sensor 521, a rear LiDAR sensor 513, a rear radar sensor 524, a left camera sensor 532, a right camera sensor 533, an internal camera sensor 535, a front camera sensor 531, and a rear camera sensor 534. The sensors may be associated with microphones 551 and 552.

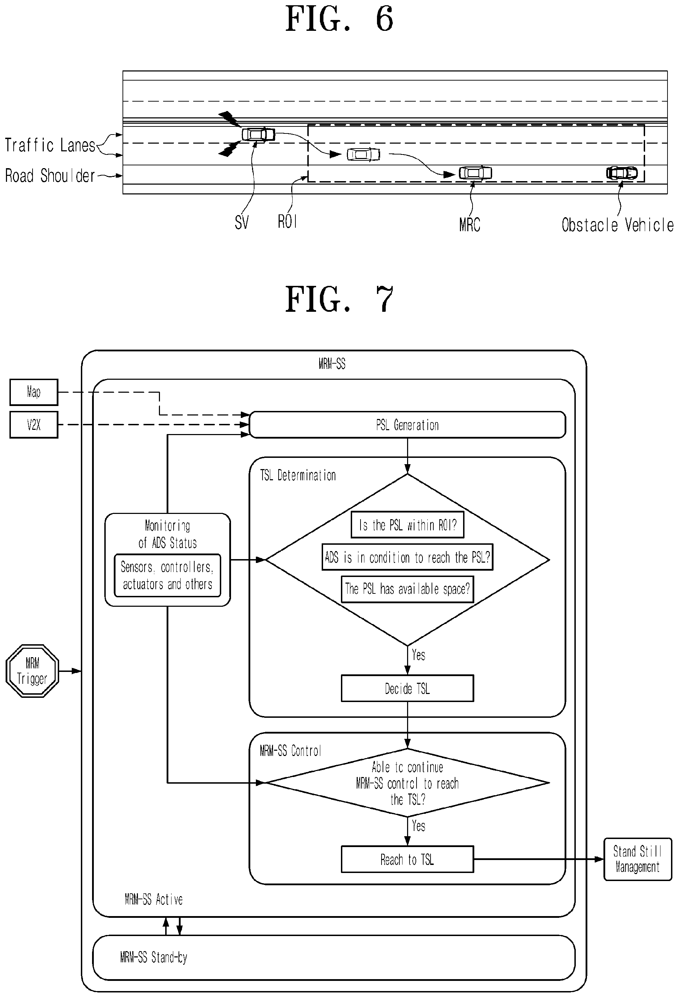

FIG. 6 illustrates a minimal risk maneuver for road shoulder stop, according to embodiments.

The objective of the Minimal Risk Maneuver for Automated Driving Road Shoulder Stop (MRM-SS) is to provide longitudinal and lateral control at the same time to stop the SV at a suitable location away from the traffic flow. To select a suitable location, it is best to stop the SV on a hard road shoulder. However, in the case where the road shoulder is not available, any space outside the lane where the SV can safely stop may be considered a suitable location.

Once MRM-SS is initiated, the MRM-SS automatically moves the vehicle to an appropriate location and stops the vehicle. It may be optional for the vehicle to notify other vehicles or relevant road users of the emergency via radio communication or an external device on the SV.

The MRM-SS performed by an automated driving system (ADS) has the following functions.

1. The MRM-SS determines whether there is a potential stopping location (PSL) away from the traffic flow where the vehicle can reach the MRC. Among the PSLs, the MRM-SS selects a target stopping location (TSL) where the vehicle will stop.

2. In selecting a TSL from among the PSLs, the MRM-SS may check whether the distance from the SV to the TSL is long enough to complete the MRM-SS, whether the status of the ADS is robust enough to safely reach the PSL, and whether the PSL has available space.

3. The MRM-SS safely controls the vehicle to reach a fixed location suitable for the goal. This process may include lane change and/or crossing road boundaries.

4. After the MRM-SS completes the vehicle maneuver and the vehicle stops at the TSL, the ADS switches to standstill management.

An ADS with the MRM-SS function starts the MRM-SS process immediately after the MRM-SS trigger is received. In addition to deceleration control, acceleration control is also allowed during driving up to the TSL.

Once the MRM-SS completes the vehicle maneuver and the vehicle stops at the TSL, the SV is removed from the active lane either completely (full shoulder stop) or mostly (half shoulder stop).

Whether to cross lane boundaries may be determined by the MRM-SS, and there is no limit to the number of times a lane boundary is crossed. Lane change is made only toward the TSL for which MRC is intended.

When the driver is detected taking over control of the vehicle, the MRM-SS immediately transfers control to the driver.

Referring to FIG. 6, the road on which the subject vehicle (SV) is traveling may include traffic lanes and/or road shoulders. A region of interest (ROI) is an area in which an operation to reach MRC of the SV is performed and may contain an obstacle vehicle. FIG. 6 illustrates the operation of the subject vehicle (SV) moving from the lane in which the SV is traveling to a road shoulder to stop by the MRM for road shoulder stop according to embodiments. Hereinafter, with reference to each figure, the MRM for road shoulder stop will be described. Specifically, the following describes an embodiment of entering a safe state through control logic in the MRM-SS operation when it becomes difficult for the SV to reach the target stopping location (TSL).

Referring to FIG. 5, the MRM types according to embodiments include types 1 to 3. The MRM method for road shoulder stop according to the embodiments is MRM type 3.

Regarding MRM type 3, a region of interest (ROI) refers to a "region of interest of the vehicle" that is set based on data collected via on-board sensors or the like of the vehicle. It is determined based on the (horizontal/vertical) distance from the vehicle, lanes, road shoulders, road structures, road shape, and the like. A potential stopping location (PSL) represents a suitable location (potential candidate) where the vehicle is to safely stop away from the traffic flow. The PSL may be generated by the MRM-SS function (MRM-SS Active). The ADS moves the vehicle out of the traffic flow and stops the same at the PSL on a road shoulder outside the road traffic lane.

A target stopping location (TSL) represents a location that is determined when the PSL satisfies the basic conditions for MRM-SS. The vehicle performs MRM-SS targeting the TSL and completes the MRM-SS when it reaches the TSL. The ADS guides the vehicle to the TSL among the PSLs.

FIG. 7 illustrates the operation of a minimal risk maneuver for road shoulder stop according to embodiments.

FIG. 7 illustrates an example of operation flow for MRM-SS as in FIG. 6.

The MRM-SS process by the ADS may include the operations described below.

When the MRM-SS function receives an MRM trigger, the MRM-SS immediately and automatically switches to the active state.

While the MRM-SS is in the active state, the MRM-SS continues to monitor the ADS status. This monitoring involves sensors, controllers, actuators, and other components of the vehicle related to the ADS functions. The monitoring also includes weather and traffic conditions. The conditions of the ADS are periodically transmitted to other MRM-SS components.

A list of PSLs is generated. Road information such as a road shape or traffic information such as traffic conditions on a road shoulder may form the basis of generating a PSL. Other relevant components of the SV, such as a map module or a V2X communication module, may be used to generate a PSL. The method of generating PSLs may depend on the manufacturer.

From the perspective of the PSL, it is best for SV to stop on a hard road shoulder. However, when the road shoulder is not available, any space outside the lane that allows the SV to stop safely may qualify as a suitable location. The PSL is the right (left) side of the road (road shoulder).

The TSL may be selected from among the PSLs as follows.

i) The MRM-SS function checks whether there is enough free space at the PSL for the SV to stop. This operation includes checking whether the road geometry of the PSL has enough physical space and whether the PSL is not physically occupied by other obstacles such as other vehicles.

ii) The MRM-SS function checks whether the PSL is within the ROI. This operation includes calculating the vertical and horizontal distances from the SV to the PSL. For the minimum distance to form an ROI, the distance from the SV to the TSL should be long enough to complete the MRM-SS. The maximum distance to form an ROI is within a distance that the ADS can safely reach while continuing MRM-SS control, taking into account the status of the ADS.

A PSL may be considered a TSL when it satisfies the following two conditions (i and ii).

If no PSL satisfies both conditions (i and ii), the PSL generation process may be repeated, or the ADS may switch to another type of MRM, such as the straight stop for MRM type 1 or the in-lane stop for MRM type 2.

The MRM-SS function controls the SV to reach the TSL. The ADS performs longitudinal and lateral control, including acceleration, deceleration, lane change, and road boundary violation.

During the MRM-SS control process, the ADS continuously checks whether the ADS is robust enough to reach the PSL. During the MRM-SS control process, if the ADS is no longer robust enough to continue the MRM-SS function, the PSL generation process may be repeated or the ADS may switch to another type of MRM, such as the straight stop for MRM type 1 or the in-lane stop for MRM type 2.

When the SV successfully reaches the TSL, the MRM-SS process is completed.

When the MRM-SS function completes the MRM process upon successfully reaching the TSL, ADS switches to the standstill management.

When there is human intervention while the MRM-SS function is processing, the ADS switches from MRM-SS to manual operation.

The specific method of selecting the TSL among the PSLs may depend on the manufacturer. For example, the TSL may be the PSL that is closest to the SV.

Referring to FIG. 7, a method of performing an MRM-SS by an ADS may include generating a first potential stopping location (PSL), determining a target stopping location (TSL) based on the first PSL, and controlling a road shoulder stop of the vehicle based on the TSL, wherein the determining of the TSL may include, based on the determining of the TSL being unsuccessful, performing a first operation for MRM, wherein the controlling of the road shoulder stop of the vehicle may include, based on determining that it is difficult to reach the TSL, performing a second operation for the MRM.

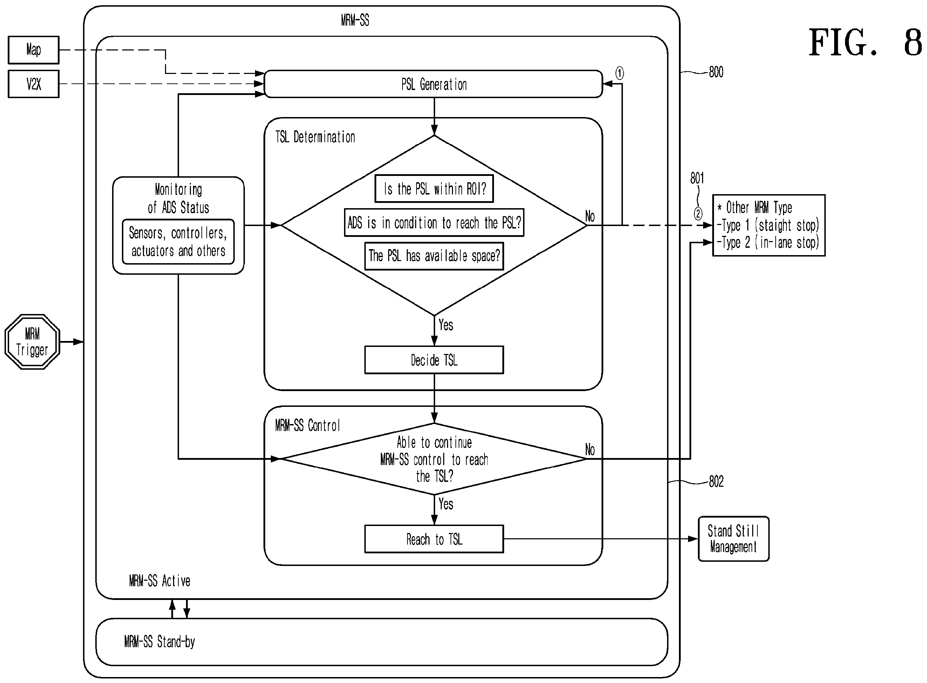

In the TSL determination method, the MRM-SS function determines the TSL based on whether the PSL is within the ROI, whether the ADS is in a condition to reach the PSL, whether the PSL is an available space, and the like. In the TSL determination, if the MRM-SS is not in a condition to determine the TSL, the ADS should perform a subsequent control method for safety. Next, the subsequent control method performed when the TSL determination condition is not satisfied is described with reference to FIG. 8.

FIG. 8 illustrates the operation of a minimal-risk maneuver for road shoulder stop according to embodiments.

In addition to FIG. 7, FIG. 8 illustrates a method of subsequent control of the MRM-SS when, as a result of the TSL determination, the TSL determination conditions (e.g., whether the PSL is within the ROI, whether the ADS is in a condition to reach the PSL, whether the PSL is available space, etc.) are not satisfied

In the PSL generation, the MRM-SS function generates a PSL before determining the TSL. In generating the PSL, at least one of the map information, V2X information, and on-board sensing information may be referenced.

In the TSL determination, the MRM-SS function determines whether the generated PSL is suitable to be determined as a TSL.

The MRM-SS function may determine the PSL as a TSL when the following conditions are satisfied: i) the PSL is within the ROI, ii) the vehicle cam reach the PSL, and iii) the PSL has free space.

In the TSL determination, in the case where the TSL cannot be determined because at least one of the above conditions is not satisfied, a step of regenerating the PSL may be performed in the default flow (①, 800 in FIG. 8). A PSL may be generated that is different from the initially generated PSL because the time, vehicle location, or nearby road conditions are different from those given when the PSL was generated prior to the TSL determination. In the optional flow (②, 801 in FIG. 8), the MRM type may be changed. Since the MRM type for MRM-SS is type 3, the MRM type may be changed from type 3 to type 1 or 2 when the TSL for MRM-SS cannot be determined. The operation of changing the MRM type does not include the option to regenerate the PSL.

The conditions for proceeding with the option flow according to embodiments are as follows. Here, when the conditions for determining whether to proceed with the optional flow are not satisfied, the MRM-SS function executes the default flow.

For example, when an attempt to determine the TSL after PSL generation fails more than a threshold number of times, the optional flow may be executed.

For example, when data received from vehicle ahead or infrastructure through vehicle-to-everything (V2X) (V2V, V2I) communication indicates that it will be difficult to determine the TSL, the optional flow may be performed. For example, the vehicle may receive, through V2V communication, from a vehicle traveling ahead of the vehicle on the same road, information indicating that it has failed to determine a TSL for MRM-SS a threshold number of times or more. In addition, the vehicle may receive, through V2I communication, from an infrastructure located in front of the vehicle, information indicating the possibility of TSL determination for MRM-SS. When the information indicates that the possibility of the TSL determination is low, the optional flow may be performed.

A method and device for performing an MRM-SS of a vehicle by an ADS according to embodiments may determine whether MRM-SS is sustainable.

As shown in FIG. 8, a TSL may be determined using the process described above. When the generated PSL satisfies all the conditions for determining the TSL, the PSL may be determined to be the TSL. After determining the TSL, MRM-SS sustainability may be determined. That is, the ADS continuously checks whether the vehicle can reach the TSL. When the ADS operates normally until the vehicle reaches the TSL, the MRM-SS operation is completed after the vehicle reaches the TSL.

However, when the method/device for MRM-SS by the ADS determines that the MRM-SS is not sustainable as a result of the MRM-SS sustainability determination, the following basic flow and/or an additional flow are performed.

As the basic flow, the ADS may change the MRM type. It may change from MRM type 3 for MRM-SS to MRM type 1 or MRM type 2.

The additional flow is performed together with the basic flow. As the additional flow, an alert (e.g., message, sound alarm, etc.) may be delivered to the driver to encourage driver fallback.

When a vehicle traveling to the TSL is in a situation where it is difficult to continue MRM-SS (No, 802 in FIG. 8), at least one of the autonomous driving sensing, communication, or control function has failed and the ADS is facing an unstable situation. Therefore, additional flows may be needed. When the ADS is unstable, it may be safer to decrease the MRM type level from type 3 to type 1 or type 2 and allow the driver to fall back to manual driving, rather than continuing to operate the automated driving-MRM function. An alarm according to embodiments may be provided by message notification or sound.

The MRM-SS delivers a message notification and/or sound to the user to guide the driver to fallback upon the determination of NO (802 in FIG. 8). The message notification/sound according to the embodiments, may be transmitted to the user device (smartphone) or the vehicle AVN. On the user device/vehicle AVN, the message may be displayed or implemented in a manner that includes a "text having details guiding a fallback" along with a "graphical icon (GUI) for selecting a fallback" and/or a sound notification.

In FIG. 8, the method and device for performing the MRM-SS according to embodiments may change the level of the MRM type based on a default flow and/or an optional flow as follows.

As the default flow, the MRM type may be changed from MRM-SS (Type 3) to Type 2 (level). When it is difficult to reach the TSL with MRM Type 3, changing the MRM level to Type 2, which has less impact on the traffic flow between Type 1 and/or Type 2 as the default method is necessary. Specifically, Type 2 stops the vehicle while maintaining the driving lane, and thus the driving lane needs to be identified. If access to one of the communication module/sensing module/database is available, lane identification may be available, and thus a level change to Type 2 will be appropriate in most situations.

As an optional flow, the MRM type may be changed from MRM-SS (Type 3) to Type 1 (level). When access to both the communication module/sensing module/database is not available, lane identification may not be allowed and attempting to change the level to Type 2 may be an unnecessary waste of time. In the case where access to both the communication module/sensing module/database is not available in an urgent situation, it may be appropriate to attempt to change the level to Type 1 immediately. Specifically, a) the ADS of the vehicle may receive, from each module, information indicating whether the module is malfunctioning. b) Determine: Upon receiving the information from both the communication module/sensing module/database indicating a malfunction of each module, the MRM-SS function may immediately attempt to change the level to Type 1.

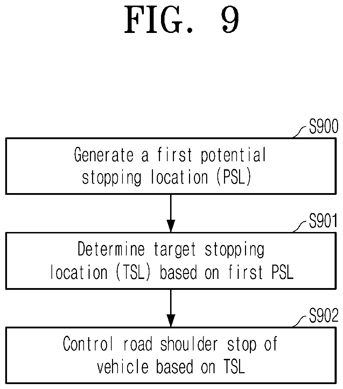

FIG. 9 illustrates a method of a minimal risk maneuver for road shoulder stop according to embodiments.

FIG. 9 shows a flow diagram illustrating a process in which the ADS of FIG. 1, the vehicle control device 4000 of FIG. 4, or the vehicle of FIG. 5 performs MRM-SS control, MRM type change, determination of MRM-SS sustainability, and subsequent operations as shown in FIGS. 6 to 8, regarding the MRM of FIG. 2 and the MRM types of FIG. 3.

S900: The method for MRM according to embodiments may include generating a first potential stopping location (PSL). Refer to the description of FIGS. 7 and 8 for the PSL generation according to the embodiments.

S901: The method for MRM according to the embodiments may further include determining a target stopping location (TSL) based on the first PSL. Refer to the description of FIGS. 7 and 8 for the method of determining a TSL according to embodiments.

S902: The method for MRM according to the embodiments may further include controlling a road shoulder stop of the vehicle based on the TSL. Refer to the description of FIGS. 7 and 8 for the operation of controlling the shoulder stop according to embodiments.

The method for MRM according to the embodiments may include performing a control operation to reach a standstill state when the TSL determination or maintenance condition is not satisfied, performing a subsequent control operation for not determining the TSL based on the result of the TSL determination, performing a subsequent control operation when the TSL maintenance condition is not satisfied even after the TSL determination, and further include adjusting the MRM type level.

Referring to FIG. 7, a method of performing an MRM-SS by an ADS may include generating a first potential stopping location (PSL), determining a target stopping location (TSL) based on the first PSL, and controlling a road shoulder stop of the vehicle based on the TSL, wherein the determining of the TSL may include, based on the determining of the TSL being unsuccessful, performing a first operation for MRM, wherein the controlling of the road shoulder stop of the vehicle may include, based on determining that it is difficult to reach the TSL, performing a second operation for the MRM.

Regarding 800 and 801 in FIG. 8, the first operation is generating a second PSL different from the first PSL or changing an MRM type, wherein the MRM type may be one of MRM type 1 for a straight stop, MRM type 2 for an in-lane stop, or MRM type 3 for a road shoulder stop. The changing of the MRM type may include changing the MRM type from MRM type 3 to one of MRM type 1 and MRM type 2.

Further, the changing of the MRM type may include changing the MRM type from the MRM type 3 to the MRM type 2 based on at least one of a communication module, a sensing module, or database of the ADS being in a normal state, and changing the MRM type from the MRM type 3 to the MRM type 1 based on the communication module, the sensing module and the database of the ADS being in an abnormal state.

The first operation may also include generating the second PSL based on a preset condition not being satisfied, and changing the MRM type based on the preset condition being satisfied.

The preset condition may include i) a condition that the number of times the determining of the TSL is unsuccessful is greater than or equal to a threshold number of times, or ii) a condition that data received from a vehicle ahead or infrastructure through vehicle-to-everything (V2X) communication indicates that it is difficult to determine the TSL.

Further, the second operation may be changing an MRM type, and the MRM type may be one of MRM type 1 for a straight stop, MRM type 2 for an in-lane stop, or MRM type 3 for a road shoulder stop. The changing of the MRM type may include changing the MRM type from the MRM type 3 to one of the MRM type 1 and the MRM type 2. Here, the second operation does not include the option of regenerating the PSL.

Further, the changing of the MRM type may include changing the MRM type from the MRM type 3 to the MRM type 2 based on at least one of a communication module, a sensing module, or database of the ADS being in a normal state, and changing the MRM type from the MRM type 3 to the MRM type 1 based on the communication module, the sensing module and the database of the ADS being in an abnormal state.

Further, the controlling of the road shoulder stop of the vehicle may include, based on determining that it is difficult to reach the TSL, performing the second operation and a fallback alarm, wherein the fallback alarm is at least one of a message alarm or a sound alarm to guide a fallback of a driver of the vehicle.

A method of performing an MRM-SS of a vehicle by an automated driving system (ADS) is performed by an ADS for performing the MRM-SS of the vehicle. The ADS may control and execute the diagram of FIG. 1, the MRM of FIG. 2, the types of MRM of FIG. 3, and may correspond to the device of FIG. 4, the vehicle of FIG. 5, and the like. The ADS may include a transceiver; a memory, and a processor. The processor may be configured to perform operations including generating a potential stopping location (PSL), determining a target stopping location (TSL) based on the PSL, and controlling a road shoulder stop of the vehicle based on the TSL. The determining of the TSL may include, based on the determining of the TSL being unsuccessful, performing a first operation for MRM, and the controlling of the road shoulder stop of the vehicle may include, based on determining that it is difficult to reach the TSL, performing a second operation for the MRM.

As a result, the SV performing the MRM-SS operation may safely and efficiently perform the MRM-SS when the SV is unable to reach the TSL or maintain the TSL after reaching the TSL. Further, it may efficiently perform safe subsequent control when the SV is unable to perform the M RM-SS.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor.

As described above, related details have been described in the best mode for carrying out the embodiments.

As described above, the embodiments are fully or partially applicable to a method, device, and system for MRM.

Those skilled in the art may change or modify the embodiments in various ways within the scope of the embodiments.

Embodiments may include variations/modifications within the scope of the claims and their equivalents.

## Claims

1. A method of performing a minimal risk maneuver for automated driving (MRM)-road shoulder stop (SS) of a vehicle by an automated driving system (ADS), the method comprising:
generating a first potential stopping location (PSL);
determining a target stopping location (TSL) based on the first PSL; and
controlling a road shoulder stop of the vehicle based on the TSL,
wherein the determining of the TSL comprises:
based on the determining of the TSL being unsuccessful, performing a first operation for MRM,
wherein the controlling of the road shoulder stop of the vehicle comprises:
based on determining that it is difficult to reach the TSL, performing a second operation for the MRM.

2. The method of claim 1, wherein the first operation is generating a second PSL different from the first PSL or changing an MRM type,
wherein the MRM type is one of MRM type 1 for a straight stop, MRM type 2 for an in-lane stop, or MRM type 3 for a road shoulder stop,
wherein the changing of the MRM type comprises:
changing the MRM type from the MRM type 3 to one of the MRM type 1 and the MRM type 2.

3. The method of claim 2, wherein the changing of the MRM type comprises:
changing the MRM type from the MRM type 3 to the MRM type 2 based on at least one of a communication module, a sensing module, and database of the ADS being in a normal state; and
changing the MRM type from the MRM type 3 to the MRM type 1 based on the communication module, the sensing module and the database of the ADS being in an abnormal state.

4. The method of claim 3, wherein the first operation comprises:
generating the second PSL based on a preset condition not being satisfied; and
changing the MRM type based on the preset condition being satisfied.

5. The method of claim 4, wherein the preset condition comprises:
a condition that a number of times the determining of the TSL is unsuccessful is greater than or equal to a threshold number of times; or
a condition that data received from a vehicle ahead or infrastructure through vehicle-to-everything (V2X) communication indicates that it is difficult to determine the TSL.

6. The method of any one of claims 1 to 5, wherein the second operation is changing an MRM type,
wherein the MRM type is one of MRM type 1 for a straight stop, MRM type 2 for an in-lane stop, or MRM type 3 for a road shoulder stop,
wherein the changing of the MRM type comprises:
changing the MRM type from the MRM type 3 to one of the MRM type 1 and the MRM type 2.

7. The method of claim 6, wherein the changing of the MRM type comprises:
changing the MRM type from the MRM type 3 to the MRM type 2 based on at least one of a communication module, a sensing module, and database of the ADS being in a normal state; and
changing the MRM type from the MRM type 3 to the MRM type 1 based on the communication module, the sensing module and the database of the ADS being in an abnormal state.

8. The method of claim 6 or 7, wherein the controlling of the road shoulder stop of the vehicle comprises:
based on determining that it is difficult to reach the TSL, performing the second operation and a fallback alarm,
wherein the fallback alarm is at least one of a message alarm or a sound alarm to guide a fallback of a driver of the vehicle.

9. An automated driving system (ADS) for performing a minimal risk maneuver for automated driving (MRM)-road shoulder stop (SS) of a vehicle, the ADS comprising:
a transceiver;
a memory; and
one or more processors;
wherein the one or more processors are configured to performs operations, the operations comprising:
generating a potential stopping location (PSL);
determining a target stopping location (TSL) based on the PSL; and
controlling a road shoulder stop of the vehicle based on the TSL,
wherein the determining of the TSL comprises:
based on the determining of the TSL being unsuccessful, performing a first operation for MRM,
wherein the controlling of the road shoulder stop of the vehicle comprises:
based on determining that it is difficult to reach the TSL, performing a second operation for the MRM.
